# EUROPEAN PATENT APPLICATION

(11) **EP 3 244 039 A1**
(43) Date of publication of application: **15.11.2017**
(21) Application number: 16169009.4
(22) Date of filing: 10.05.2016
(51) Int. Cl.: F02C 7/16, F02C 7/36, F28D 15/02

(54) **HEAT EXCHANGE SYSTEM FOR A POWER GEARBOX, A POWER AND A TURBO ENGINE WITH A POWER GEARBOX**

(71) Applicant: Rolls-Royce Deutschland Ltd & Co KG, 15827 Blankenfelde-Mahlow (DE)
(72) Inventor: Sibilli, Thierry, Dr., Busan (KR)
(74) Representative: Maikowski & Ninnemann Patentanwälte Partnerschaft mbB

(57) **Abstract**

The invention relates to a heat exchange system for a power gearbox (10) mechanically coupling at least one low pressure compressor stage (131, 150) with at least one turbine stage (180, 190) in a turbo engine (100), in particular an aircraft turbo engine, with at least one loop-less latent heat device (2, 2') or at least one non-oscillatory latent heat device (2) thermally connecting a hot region (H, H') of the turbo engine (100) being thermally in contact with the power gearbox (10) with a cold region (C, C') of the turbo engine (100) which compared to the hot region (H) is relatively cold. It also relates to a power gearbox (10) and a turbo engine (100).

## Description

The invention relates to a heat exchange system for a power gearbox with the features of claim 1, a power gearbox with the features of claim 11 and a turbo engine with a power gearbox with the features of claim 12.

Power gearboxes in turbo engines are generally used to mechanically couple rotating parts to change the speed, torque and / or direction of a power source. One issue is the thermal management of power gearboxes. US 2014 / 0165570 A1 describes the application of oscillatory looped heat pipes.

The issue transferring heat is addressed by a heat exchange system with the features of claim 1.

A power gearbox is mechanically coupling at least one low pressure compressor stage with at least one turbine stage in a turbo engine, in particular an aircraft turbo engine.

The heat exchange system comprises at least one loop-less latent heat device or at least one non-oscillatory latent heat device thermally connecting a hot region of the turbo engine being thermally in contact with the power gearbox with a cold region of the turbo engine which compared to the hot region is relatively cold. Therefore, the latent heat device can transfer heat from the power gearbox towards heat sinks elsewhere in the turbo engine.

A latent heat device is a heat-transfer device that combines the principles of both thermal conductivity and phase transition to efficiently manage the transfer of heat between the two regions, i.e. the hot and the cold region. A heat pipe or a thermosiphon are both embodiments of a latent heat device, having e.g. the shape of a pipe, whereas the pipe can be essentially straight (linear) or complex shaped. A thermosiphon is a heat pipe in which the transport of condensed working fluid is under gravity alone. Otherwise, the transport of condensed working fluid is effected e.g. by some wick device.

At the hot interface of the latent heat device a working fluid in liquid phase is in contact with a thermally conductive solid surface. The heat turns the working fluid into a vapor by absorbing heat from the solid surface; i.e. a surface thermally in contact with the hot region. The vaporized working fluid then travels along the latent heat device to the cold region and condenses back into a liquid working fluid - releasing the latent heat.

The liquid working fluid then returns to the part of the latent heat device which is at the hot region through either capillary action, centrifugal force, or gravity, and the cycle repeats. Working fluids in latent heat devices for turbo engines can e.g. be Flutec PP2, Flutec PP0, water, a Freon derivative, or ammonia. The surface material of the at least one latent heat device can comprise steel, aluminum or copper. Generally, latent heat devices do not comprise moving parts and require a very low maintenance.

Due to the very high heat transfer coefficients for boiling and condensation, latent heat devices are highly effective thermal conductors. For pipe the effective thermal conductivity can vary with the length of the heat pipe, and can approach 100 kW/(mK) for long heat pipes, in comparison with approximately 0.4 kW/(mK) for copper.

In one embodiment, the at least one latent heat device passes through a channel for an airflow in the turbo engine or contacts a channel for an airflow in the turbo engine, in particular a compressor channel or a bypass duct and / or is integrated at least partially in a vane and / or a strut. The hot region would be in any case connected to the power gear box. The cold region would be at some other region of the turbo engine, e.g. exposed to an airflow.

In a further embodiment, the hot part of the at least one latent heat device is thermally coupled with the relatively hot region of a casing of the power gearbox and the cold part of the latent heat device is thermally coupled with the airflow in the bypass duct being the cold region.

The at least one latent heat device is in one further embodiment thermally coupled with a heat transfer device which is enclosed, embedded and / or attached with the casing of the power gearbox. Coupling the at least one latent heat device with those heat transfer devices is effective to remove heat from the power gearbox.

In another embodiment, the at least one latent heat device is located at least partially within the core of the turbo engine.

The removed heat from the power gearbox can be used in a different part of the turbo engine if least a part of the at least one latent heat device is part of an anti-icing and / or deicing device in the turbo-engine.

In a further embodiment, the at least one latent heat device is integrated in a heat exchange device between hot oil and air, such as in an accessory gearbox.

One effective embodiment of the heat exchange system comprises at least one latent heat device integrated with a matrix heat exchanger. A matrix heat exchanger combined with the latent heat device is a very efficient way to transfer heat.

Alternatively or in addition, the latent heat device comprises at least one heat pipe and / or a non-oscillatory loop heat pipe.

Embodiments can use as working fluid Flutec PP2, Flutec PP0, water, a Freon derivative, or ammonia. All these working fluids are efficiently operable in the temperature ranges encountered in turbo engines.

The issue is also addressed by a power gearbox of a turbo engine according to claim 11 and a turbo engine according to claim 12.

Embodiments of the invention are shown in the figures, where
- Fig. 1: shows a schematic view of an aircraft turbo engine with a power gearbox;
- Fig. 2: shows schematically different embodiments using latent heat devices in the form of heat pipes;
- Fig. 3: shows schematically further embodiments using latent heat devices in the form of heat pipes;
- Fig. 4: shows schematically an embodiment with two connected latent heat devices;
- Fig. 5: shows schematically an embodiment with a heat transfer device comprising heat pipes embedded with the casing of a power gearbox;
- Fig. 6: shows schematically an embodiment with a heat transfer device comprising heat pipes attached to the casing of a power gearbox;
- Fig. 7: shows schematically an embodiment in which a cooling airflow is connected through heat pipes with the casing of a power gearbox.

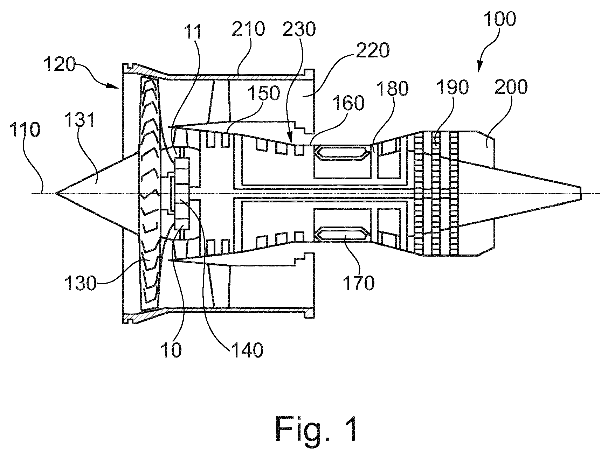

In Fig. 1 an aircraft engine 100 is shown schematically to illustrate the function of one embodiment of a power gearbox 10.

Fig. 1 shows a gas turbine engine in the form of a geared turbo fan engine. The engine includes a gas turbine engine 100, having a principal and rotational axis 110. The aircraft engine 100 comprises, in axial flow series, an air intake 120, a propulsive fan stage 130 (which is here considered as a low pressure compressor), a gear train 140 comprising the power gearbox 10, a low pressure compressor 150, a high-pressure compressor 160, a combustor 170, a high-pressure turbine 180, a low-pressure turbine 190 and an exhaust nozzle 200. A nacelle 210 generally surrounds the aircraft engine 100 and defines the air intake 120.

The aircraft engine 100 works in the conventional manner so that air entering the intake 120 is accelerated by the fan 130 to produce two air flows: a first air flow into the low pressure compressor 150 within a core engine 230 and a second air flow which passes through a bypass duct 220 to provide the main propulsive thrust. The low- and high-pressure compressors 150, 160 in the core engine 230 compress the air flow directed into it for combustion in the combustor 170. The air not entering the bypass duct 220 is flowing through the core engine 230.

The resultant hot combustion products expand through, and drive the high- and low-pressure turbines 180, 190 before being exhausted through the nozzle 200 to provide additional propulsive thrust. The high pressure turbine 180 and low pressure turbines 190, respectively, drive the high pressure compressor 160 and the low pressure compressor 150 / fan 130 via suitable shafting arrangements.

The fan 130 is drivably connected to a low pressure shaft via the gear train 140 located drivable between the low pressure shaft and the fan 130. The gear train 140 is a reduction gear train in that it is arranged to reduce the speed of the fan 130 relative to the speed of the low pressure turbine 190 and low pressure compressor 150. Such an arrangement allows for a higher speed and a more efficient low pressure turbine, and a slow spinning larger fan which can provide a higher bypass ratio. This freedom allows the speed of the fan 130 and low pressure turbine 190 to be independently optimized, but at a potential weight penalty resulting from the gear train.

The gear train 140 may be an epicyclical gearbox arranged in a planetary or star configuration. As shown in Fig. 1, the power gearbox 10 is connected as a planetary power gearbox which provides a favorable gear ratio for large civil gas turbine engines. It will be appreciated that some applications include differential or compound arrangements.

Other aircraft turbine engines 100 to which the present disclosure may be applied may have alternative configurations. By way of example such engines may have an alternative number of interconnecting shafts (e.g. three) and / or an alternative number of compressors and / or turbines.

In Fig. 1, a casing 11 of the power gearbox 10 is shown only schematically. The casing 11 is circumferentially enclosing the power gearbox 10.

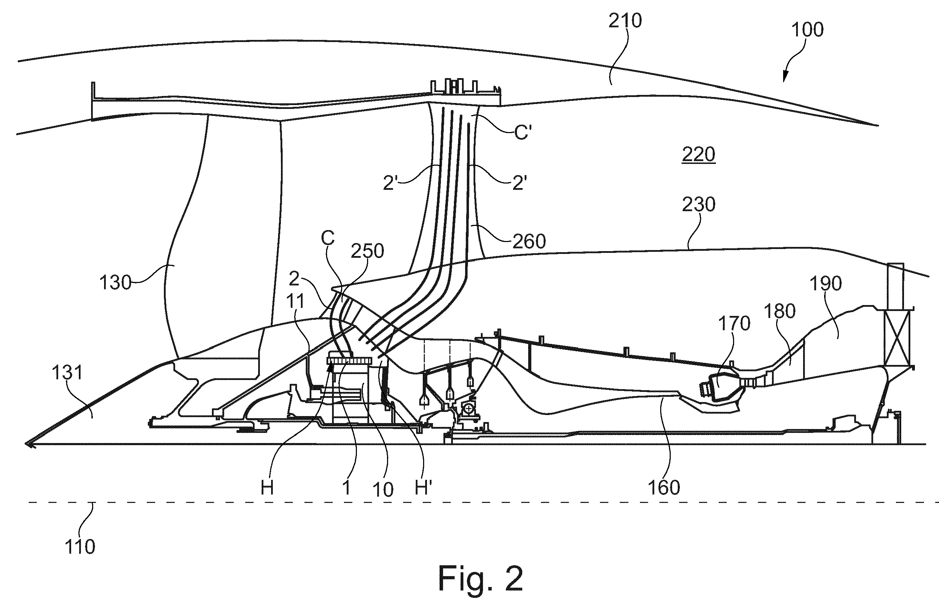

This is shown in more detail in Fig 2. The casing 11 is enclosing the power gearbox 10 which comprises in the embodiment shown a heat transfer device 1. The heat transfer device 1 is here an enclosed heat exchanger with its hot side exposed to the power gear box 10. The oil within the power gearbox 10 is transferring the heat within the casing to the hot side of the heat exchange device 1.

In the embodiment shown, the heat transfer device 1 covers the complete circumference of the casing 11 but is still enclosed within the casing 11. Here, the heat transfer device 1 is formed by a ring-like structure. In cross-section, the heat transfer device 1 is plate-shaped.

In other embodiments, the heat transfer device 1 only covers a part of the circumference of the casing 11. It is also possible that more than one heat transfer device 1 is used in connection with the casing 11.

In the embodiment shown in Fig. 2, the heat transfer device 1 can comprise a material with a higher thermal conductivity than the casing 11 itself, thereby enabling an improved heat transfer from the power gear box 10 into the aircraft engine 100 or vice versa. The materials of the heat transfer device 1 could be e.g. copper, aluminum, nickel, tungsten, molybdenum and / or an alloy comprising at least two of the materials.

Other embodiments - as will be shown below - comprise particular designs in the heat transfer device 1 to enhance the heat transfer.

This heat exchanger device 1 is coupled to a latent heat device 2, here two heat pipes which have a curved but generally straight shape. The heat pipes 2 have no loops. The latent heat devices 2 connect a hot region H within the casing 11 with a cold region C that is here positioned within a vane 250 exposed to the airflow into the core engine 230. The latent heat devices 2 thermally connect the hot region H within the casing 11 of the power gear box 10 with the cold region C exposed to cold air. Hence, the latent heat devices 2 transport thermal energy from the power gearbox 10 to the relatively cold air. The thermal energy flowing through the vane 250 can e.g. be used for anti-icing or deicing purposes.

The embodiment shown in Fig. 2 shows another application of latent heat devices 2' which take the thermal energy from a hot region H' just from within the casing 11 to a strut 260 which is exposed to the airflow in the bypass-duct 220. The thermal energy in the hot region H' is transferred through the oil of the power gear box 10 to the latent heat devices 2'. The latent heat devices 2' are curved, non-looped heat pipes. The working fluid within those latent heat devices can be oscillatory or non-oscillatory.

The working fluid within the latent heat devices can be chosen from the group of Flutec PP2, Flutec PP0, water, a Freon derivative, or ammonia. All these working fluids have boiling points below 250 °C (at normal atmospheric pressure) which can be considered as a low temperature range.

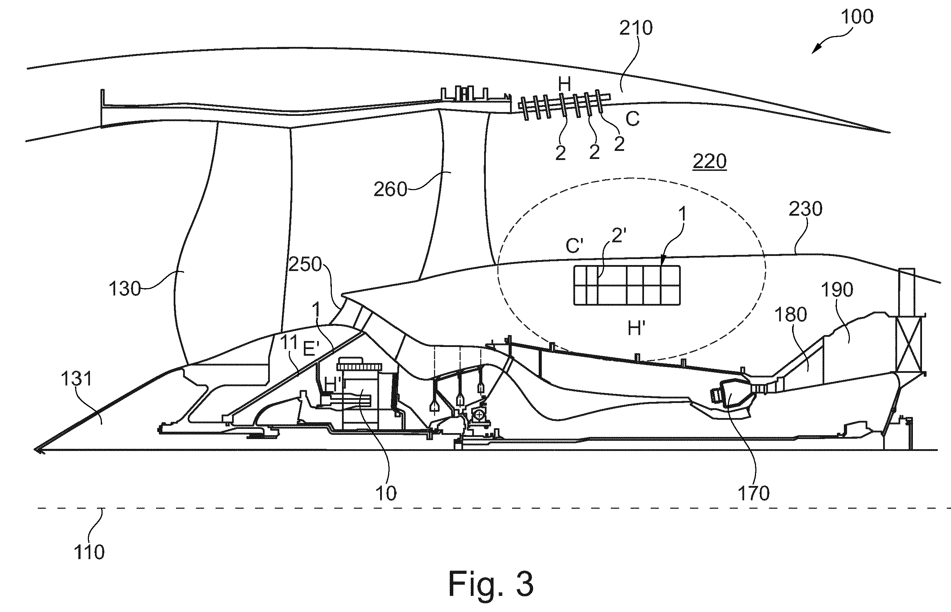

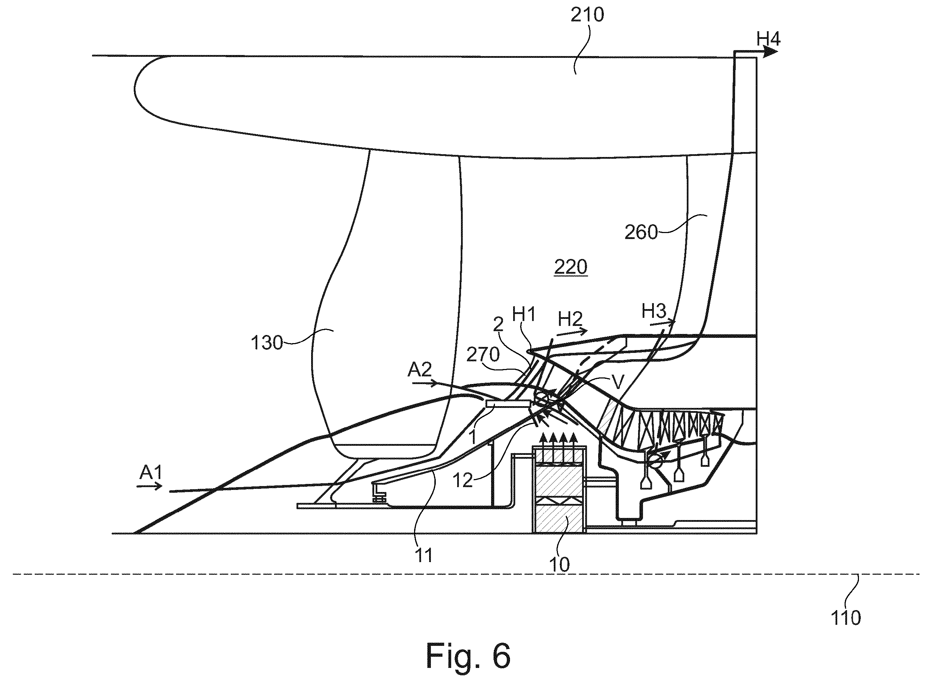

It should be understood that the latent heat devices 2, 2' shown in Fig. 2 do not necessarily have to be used together. It is possible to use the latent heat devices 2 to the vane 250 and the latent heat devices 2' to the strut 260 also independently from each other. It should also be noted that the heat exchange device 1 does not necessarily have to be enclosed within the casing 11. Embodiments with heat exchange devices 1 embedded with the casing 11 (see Fig. 3) and attached to the casing (see Fig. 6) will be shown below.

The essentially linear (i.e. non-looped) design of the latent heat devices 2, 2' allows the use in regions within the turbo engine 100 with limited space.

By using a heat exchange device 1 and heat pipes 2, 2' heat exchangers necessary for cooling the power gearbox 10 can be reduced in size.

Fig. 3 shows two further applications of latent heat devices 2, 2' which can be used in conjunction (e.g. with also the embodiments shown in Fig. 2) or individually.

One set of latent heat devices 2, i.e. linear heat pipes are connecting the inner part of the nacelle 210 with the bypass duct 220. The inner part of the nacelle 210 is the hot region H, the bypass duct 220 is the cold region C.

Another set of latent heat devices 2' is located in a heat pipe exchanger (HPHX) which is here part of a heat exchange device 1 embedded in the casing 11. The heat exchange device 1 is shown enlarged in the circle in Fig. 3. As in the embodiment shown in Fig. 2, the heat exchange device 1 can extend completely around the circumference of the casing 11 or along a section of the circumference.

The hot side of the heat exchange device 1 is exposed to impinging oil from within the power gearbox 10, i.e. the hot region H'. The heat within the heat transfer device 1 is also transported with heat pipes 2' extending from the hot side to the cold side of the heat exchange device. Therefore, the latent heat devices 2' are thermally coupled with the heat transfer device 1 which is embedded with the casing 11 of the power gearbox 10.

It should be understood that the use of a heat pipe heat exchanger can also be used in an enclosed heat transfer element 1 (see Fig. 2) and / or in an attached heat transfer element (see Fig. 6). It can also be used in a heat pipe heat exchanger that is part of an integrated fuel-air cooling system, as e.g. a heat exchanger in accessory gearbox.

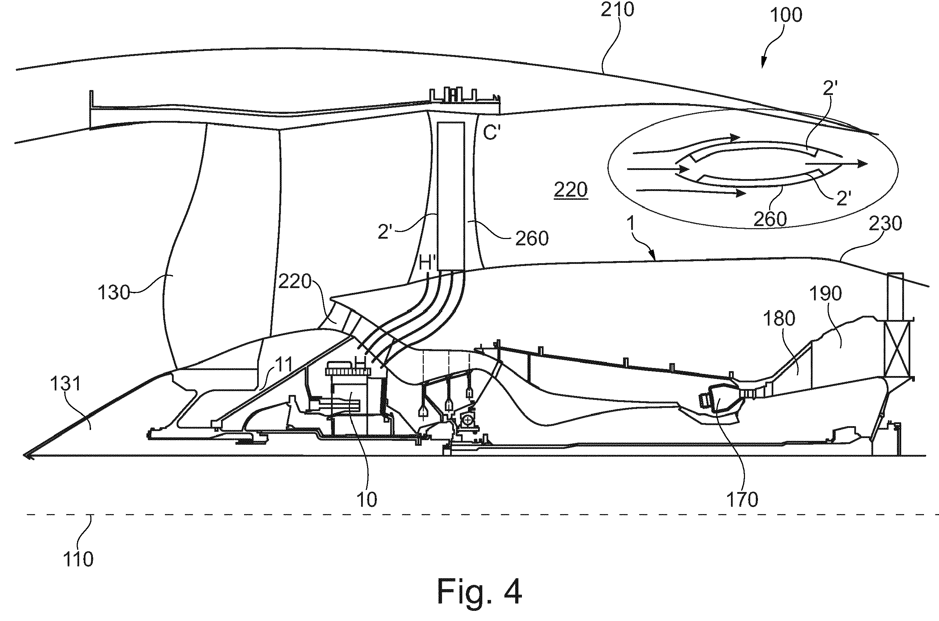

In Fig. 4, a heat exchange system with two thermally connected latent heat devices 2, 2' is shown. The first latent heat device 2 thermally connects the power gearbox 10 with the base of the strut 260. The hot region H is here within the casing 11 of the power gearbox 10. The cold region C is at the base of the strut 260. The first latent heat device 2 comprises here tubular, curved, non-looped heat pipes.

The cold end of the first latent device 2 is thermally coupled with the hot end of a second latent heat device 2'. The second latent heat device 2' is here a flat heat pipe, the shape being adapted to the shape of the strut 260. In the enlarged section shown in Fig. 4 a cross section through the strut 260 is shown. The flat heat pipe of the second latent heat device 2' is positioned at the inner walls of the strut 260. The middle section of the strut 260 allows some airflow so that the second latent heat device 2' comprises two parts, which are subjected to an airflow from the outside and from within. The air flowing (symbolized as arrows) around the strut 260 ensures an effective cooling.

By using two different latent heat devices 2, 2' in different parts of the turbo engine 100, the respective working fluid in the heat pipes can be matched to the heat transfer specifications. Therefore, the heat transfer can be optimized. Furthermore, this embodiment shows that the shape of the latent heat device 2' can be tailored to the shape of engine parts, here the strut 260. The second latent heat device 2' is not merely a pipe but is a non-looped, complex shaped, multi-part latent heat device with a large surface area for optimizing heat transfer.

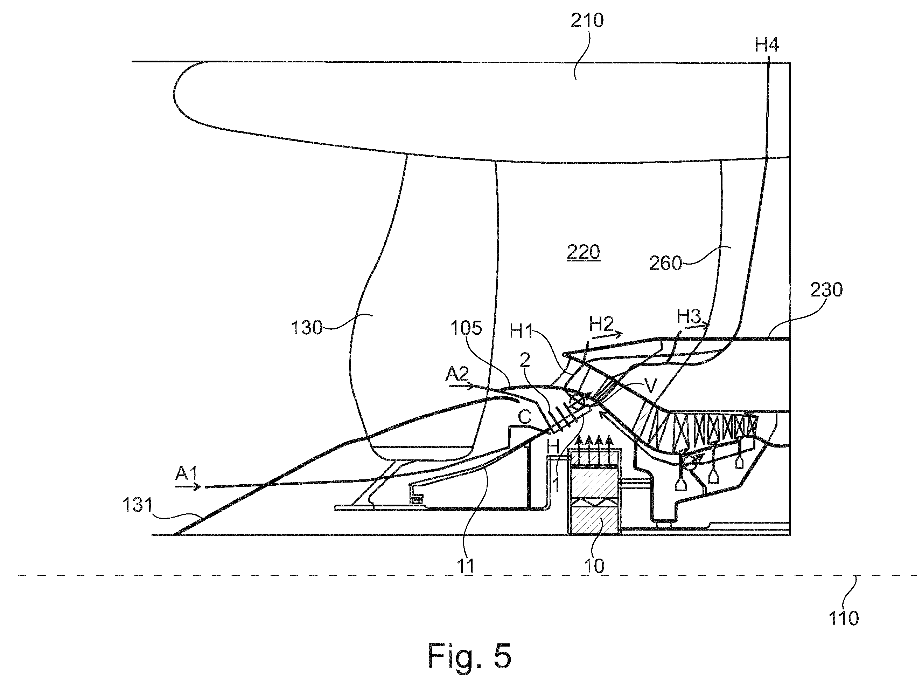

In the embodiment shown in Fig. 5, a heat transfer device 1 is again embedded with the casing 11. The heat transfer device 1 allows the exchange of heat between the power gear box 10 and / or other parts of the aircraft turbine 100. The heat exchange takes place via the hot oil and the heat exchange device. The heat transfer is enhanced by using linear heat pipes 2 thermally connecting the hot region H inside the casing 11 with the relatively cold region H outside the casing 11.

In this embodiment, the heat transfer device 1 is embedded within the casing 11 designed for an effective heat transfer through convection, conduction and / or radiation.

This means that the heat transfer device 1 is at least partially subjected or exposed to oil from the power gear box 10.

The power gear box 10, e.g. a planetary gear drive, adjusts the rotational speed of its output shaft with a sun gear, planet gear and a ring gear, not shown here.

In the embodiment shown in Fig. 5, airflows A1, A2 are guided from the frontal section of the aircraft turbo engine 100, e.g. the nose cone 131 (airflow A1) and from a location from the region of the fan 130 (airflow A2) via a scoop 105, towards the embedded heat transfer device 1, entering the heat exchange device 1 which comprises a porous medium in the embodiment shown. The cooling airflows A1, A2 help in cooling the scavenge oil so that apart from the embedded heat transfer device 1 no external heat exchanger or only a smaller external heat exchanger (not shown here) is required. The cool airflows A1, A2 can interact with the heat pipes 2 to transport the heat away from the power gearbox 10.

Due to the heat exchange the temperature of the airflows A1, A2 is increased so that heated air H1, H2, H3, H4 can e.g. be used for deicing purposes in other parts of the aircraft turbo engine 100, such as a vane 250. Fig. 5 just shows the heating of the air flows A1, A2 and the transport of the heated airflow H in a schematic way. A valve system V is used to control the flow of the heated air H1, H2, H3, H4.

In other embodiments, the cool airflows A1, A2 and the heat airflows H1, H2, H3 might take different routes. The first heat flow H1 is used for deicing the vane 250. The second and third heat flows H2, H3 are directed into the bypass-duct 220. A fourth heat flow H4 is directed overboard outside of the nacelle 210. In other embodiments, different combinations and sub-combinations of those hot airflows H1, H2, H3, H4 can be used.

It is also possible to use the cool airflows A1, A2 individually and not in conjunction as shown in Fig. 5.

In Fig. 6, a variant of the embodiment shown in Fig. 5 is shown. Reference can be made to the above description. The heat transfer device 1 is here attached to the casing 11 of the power gear box 10. Oil from the power gear box 10 is gathered by an oil collector 12 and channeled towards the heat transfer device 1 which comprises here a porous medium. The oil flow into the attached heat transfer device 1 can be enhanced by a pump which is not shown here.

The heat transfer device 1 comprises essential linear heat pipes 2 connecting the hot region H at the heat transfer device 1 with the relatively colder cold region C in the vane 270.

Again it is also possible to use the cool airflows A1, A2 individually and not in conjunction as shown in Fig. 6.

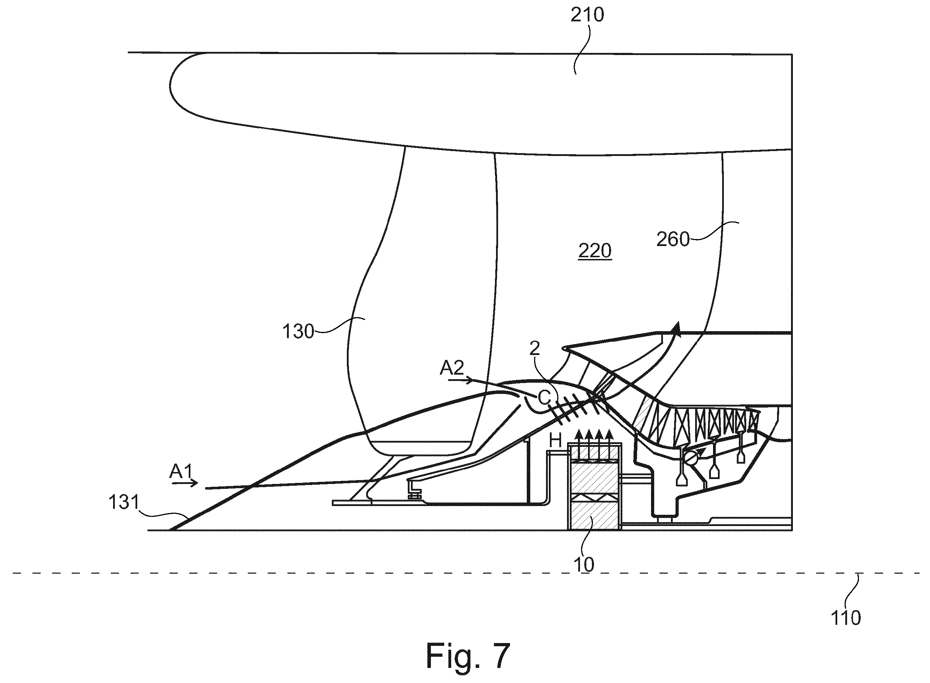

In Fig. 7, a further variation of the embodiments shown in Fig. 5 and 6 is shown. The second cool airflow A2 interacts directly with heat pipes 2 at the cool region C. The heat pipes 2 extend into the casing 11 of the power gear box 10, i.e. the hot region H.

In other embodiments, the heat pipes 2 could interact with the first cold airflow A1 or with both cool airflows A1, A2.

### List of reference numbers

- 1: heat transfer device
- 2, 2': latent heat device, heat pipe

- 10: power gearbox
- 11: casing of power gearbox
- 12: oil collector

- 100: aircraft turbo engine
- 105: scoop
- 110: rotational axis of turbo engine
- 120: air intake
- 130: fan
- 131: cone of fan
- 140: gear train
- 150: low pressure compressor
- 160: high pressure compressor
- 170: combustor
- 180: high pressure turbine
- 190: low pressure turbine

- 200: exhaust nozzle
- 210: nacelle
- 220: bypass duct
- 230: core of an aircraft engine
- 250: vane
- 260: strut

- C, C': cold region
- H, H': hot region
- V: valve system

## Claims

1. Heat exchange system for a power gearbox (10) mechanically coupling at least one low pressure compressor stage (131, 150) with at least one turbine stage (180, 190) in a turbo engine (100), in particular an aircraft turbo engine, with at least one loop-less latent heat device (2, 2') or at least one non-oscillatory latent heat device (2) thermally connecting a hot region (H, H') of the turbo engine (100) being thermally in contact with the power gearbox (10) with a cold region (C, C') of the turbo engine (100) which compared to the hot region (H) is relatively cold.

2. Heat exchange system according to claim 1, wherein the at least one latent heat device (2. 2') passes through a channel for an airflow (A1, A2) in the turbo engine (100) or contacts a channel for an airflow (A1, A2) in the turbo engine (100), in particular a compressor channel or a bypass duct (220) and / or is integrated at least partially in a vane (250) and / or a strut (260).

3. Heat exchange system according to claim 1 or 2, wherein the hot part of the at least one latent heat device (2, 2') is thermally coupled with the relatively hot region (H, H') of a casing (11) of the power gearbox (10) and the cold part of the latent heat device (2) is thermally coupled with the airflow in the bypass duct (220) being the cold region (C, C').

4. Heat exchange system according to at least one of the preceding claims, wherein the at least one latent heat device (2, 2') is thermally coupled with a heat transfer device (1) which is enclosed, embedded and / or attached with the casing (11) of the power gearbox (10).

5. Heat exchange system according to at least one of the preceding claims, wherein the at least one latent heat device (2, 2') is located at least partially within the core (230) of the turbo engine (100).

6. Heat exchange system according to at least one of the preceding claims, wherein at least a part of the at least one latent heat device (2, 2') is part of an anti-icing and / or deicing device in the turbo-engine (100).

7. Heat exchange system according to at least one of the preceding claims, wherein the at least one latent heat device (2, 2') is integrated in a heat exchange device (1) between hot oil and air.

8. Heat exchange system according to at least one of the preceding claims, wherein the at least one latent heat device (2, 2') is integrated with a matrix heat exchanger.

9. Heat exchange system according to at least one of the preceding claims, wherein the at least one latent heat device (2) comprises at least one heat pipe (2, 2') and / or a non-oscillatory loop heat pipe.

10. Heat exchange system according to at least one of the preceding claims, wherein the working fluid is Flutec PP2, Flutec PP0, water, a Freon derivative, or ammonia.

11. Power gearbox (10) of a turbo engine (100) coupled with at least one heat exchange system according to at least one of the claims 1 to 10.

12. Turbo engine (100), in particular an aircraft turbo engine with at least one power gearbox (10) according to claim 11.
